Europäisches Patentamt

European Patent Office

Office européen des brevets

(11) Veröffentlichungsnummer: **0 457 179 A1**

(12) ## EUROPÄISCHE PATENTANMELDUNG

(21) Anmeldenummer: 91107472.2

(22) Anmeldetag: 08.05.91

(51) Int. Cl.⁵: **H05B 3/60, A23L 3/22**

(30) Priorität: 16.05.90 DE 4015704

(43) Veröffentlichungstag der Anmeldung:
21.11.91 Patentblatt 91/47

(84) Benannte Vertragsstaaten:
FR GB IT NL SE

(71) Anmelder: GEA FINNAH GMBH
Einsteinstrasse 18
W-4422 Ahaus(DE)

(72) Erfinder: Steinhauser, Ulrich
Böckler Strasse 13
W-4422 Ahaus(DE)

(74) Vertreter: Busse & Busse Patentanwälte
Postfach 1226 Grosshandelsring 6
W-4500 Osnabrück(DE)

(54) **Vorrichtung zur konduktiven Erwärmung von fliessfähigen Gütern.**

(57) Die Vorrichtung zur konduktiven Erwärmung von fließfähigen Gütern, insbesondere Nahrungs- oder Genußmitteln, umfaßt einen Strömungskanal (7) mit gleichbleibendem Querschnitt, der bereichsweise von Wandteilen aus elektrisch isolierendem Material und von Elektroden bildenden Wandteilen für den Aufbau eines elektrischen Feldes im Gutstrom begrenzt ist. Dabei sind in Strömungsrichtung (1) abwechselnd hintereinander rohrförmige Distanzstücke (2) aus isolierendem Material und rohrförmige Elektroden (3a,3b,3c,3d) vorgesehen, die zwischen sich jeweils ein axial ausgerichtetes elektrisches Feld aufbauen.

Fig. 1

Die vorliegende Erfindung bezieht sich auf eine Vorrichtung zur konduktiven Erwärmung von fließfähigen Gütern, insbesondere Nahrungs- und Genußmitteln, gemäß dem Oberbegriff des Anspruchs 1.

Bei einer bekannten Vorrichtung dieser Art (WO 87/04902) sind in die Wandung des Strömungskanals platten- oder kreissegmentförmige Elektroden eingelassen, die einander quer zur Strömungsrichtung des Gutstromes paarweise gegenüberliegen und jeweils ein quergerichtetes elektrisches Feld zur Erwärmung des Gutes aufbauen. Die elektrischen Felder quer zur Strömungsrichtung bedingen bei dieser Vorrichtung kurze, schnell vom Gut durchströmte Einwirkungszonen, in denen empfindliche Güter wie Milchprodukte entweder nur in kleinen Temperaturstufen erwärmt werden dürfen oder Gefahr laufen, örtlich überhitzt zu werden.

Eine weitere bekannte Vorrichtung (EP 0 032 840) sieht stabförmige Elektrodenpaare vor, die den Strömungskanal in Querrichtung durchsetzen. Eine derartige Vorrichtung bildet zwar längsausgerichtete Felder zwischen den Elektrodenpaaren aus, jedoch mit hoher Felddichte an der Elektrodenoberfläche, die Gefahren örtlicher Gutüberhitzungen begründet. Zudem verursachen die Elektroden Störungen im Strömungsverlauf des Gutstromes, die eine Gefahr von örtlichen Überhitzungen und Belagbildungen im Bereich der Elektroden begünstigen. Der bauliche Aufwand ist bei derartigen Vorrichtungen groß, und die Möglichkeiten einer schnellen Reinigung der Vorrichtung bei Wechsel des Gutes sind stark eingeschränkt.

Der Erfindung liegt die Aufgabe zugrunde, eine Vorrichtung zur konduktiven Erwärmung von fließfähigen Gütern, insbesondere Nahrungs- oder Genußmitteln, zu schaffen, die bei einfachem Aufbau eine wirkungsvolle Erwärmung auch empfindlicher Güter ohne einschränkende Belagbildungen in diesen ermöglicht.

Die Erfindung löst diese Aufgabe durch eine Vorrichtung mit den Merkmalen des Anspruchs 1. Hinsichtlich weiterer wesentlicher Ausgestaltungen wird auf die Ansprüche 2 bis 31 verwiesen.

Die Erfingung schafft eine besonders einfache Vorrichtung zur konduktiven Erwärmung mit einem frei von Strömungsbeeinträchtigungen durchströmbaren Strömungskanal für das fließfähige Gut, in dem dieses in langen Feldern mit gleichmäßiger Felddichteverteilung mit wesentlich verringerter Gefahr örtlicher Überhitzungen und Belagbildungen wirksam erwärmbar ist. Mit wenigen einfachen Grundelementen ist die Erwärmungsstrecke zu Aufbau- und Reinigungszwecken zerlegbar sowie bedarfsweise einfach zu verändern. Denn die rohrförmigen Distanzstücke sind schnell austauschbar und die Feldlängen einfach auf die gewünschten Betriebsbedingungen abzustimmen.

Rohrförmige Elektroden sind zwar für sich bekannt (DE-PS 890 551), jedoch sind diese als allseitig umflossene Bauteile innerhalb eines Strömungskanals angeordnet, in dem sie ein Hindernis für das fließfähige Gut bilden. Dabei ist mehreren Elektroden nur eine Gegenelektrode zugeordnet, und von diesen wird ein axiales elektrisches Feld in einem sich zunehmend verjüngenden Strömungskanal aufgebaut, in dem die Strömung vielfältigen Störungen ausgesetzt ist, die Anlaß für örtliche Überhitzungen und Ablagerungen, insbesondere bei inhomogenem Gut, geben.

Weitere Einzelheiten und Vorteile ergeben sich aus der nachfolgenden Beschreibung und der Zeichnung, die mehrere Ausführungsbeispiele einer erfindungsgemäßen Vorrichtung zur konduktiven Erwärmung schematisch veranschaulicht. In der Zeichnung zeigen:

Fig. 1 einen schematischen Gesamtaufbau der Vorrichtung im Schnitt mit schematisch angedeuteter Spannungsquelle und Temperaturregelung;

Fig. 2 eine abgebrochene Darstellung des Details x in Fig. 1 in Vergrößerung;

Fig. 3 eine abgebrochene Darstellung der Details y in Fig. 1 in Vergrößerung;

Fig. 4 eine Frontansicht einer Endplatte, und

Fig. 5 eine Ansicht eines dehnungskompensierenden Verbindungsstücks.

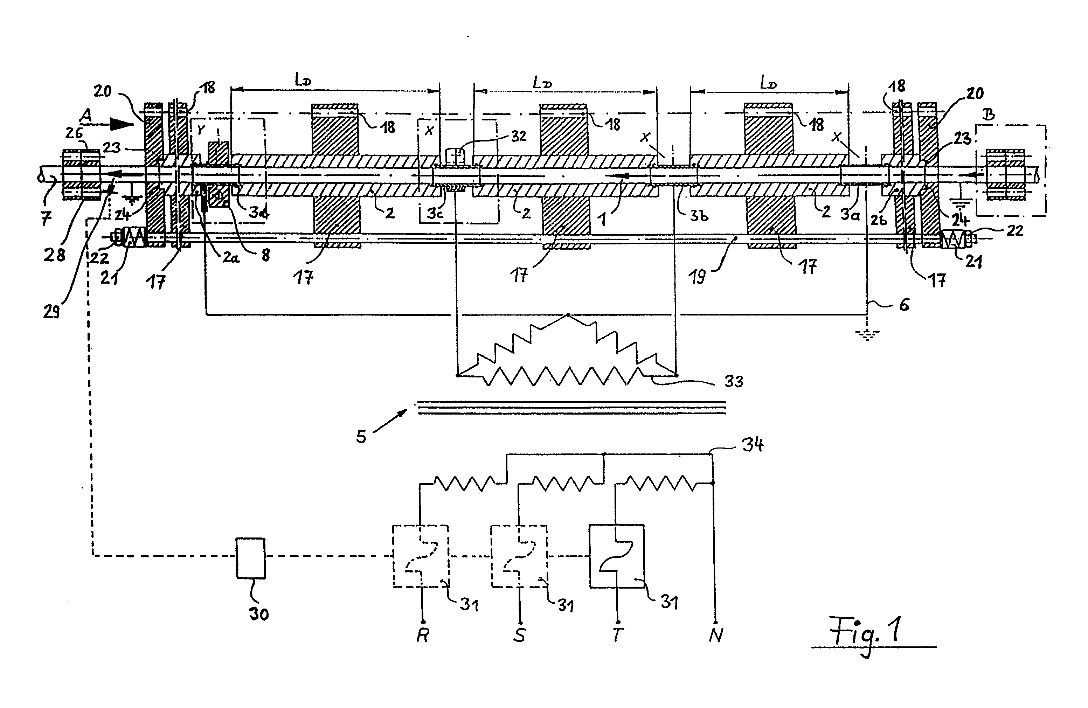

In Fig. 1 sind vier Elektroden 3a, 3b, 3c, 3d und drei Distanzstücke 2 im Verbund dargestellt, die eine Erwärmungseinheit bilden. In Strömungsrichtung 1 des fließfähigen Gutes folgt dabei auf eine rohrförmige Elektrode 3a, 3b und 3c, 3d jeweils ein rohrförmiges Distanzstück 2 aus isolierendem Material, und die Elektroden 3a und 3b sowie 3c und 3d sind einander paarweise zugeordnet und bauen zwischen sich jeweils ein axial ausgerichtetes elektrisches Feld im Gutstrom eines zu erwärmenden Gutes auf, wenn die Elektroden 3b und 3c von einer Dreiphasenwechselspannungsquelle (Drehstromtransformator 5) beaufschlagt werden. Damit wird über eine definierte Länge, die sich aus den Elektrodenlängen LE und den Distanzstücklängen LD zusammensetzt, eine Erwärmungsstrecke gebildet, deren Erwärmungsleistung durch das Spannungsgefälle zwischen den Elektroden bestimmt ist. Die Distanzstücke 2 und die Elektroden 3a, 3b, 3c, 3d haben den gleichen Innendurchmesser 4 und grenzen fugenlos aneinander an. Damit ist eine störungsfreie, einer Belagbildung entgegenwirkende Strömung des zu erwärmenden Gutes im Strömungskanal 7 gegeben, in dem sich keine Gutreste ansammeln und Nester bilden können.

In der dargestellten Ausführungsform sind die beiden mittleren Elektroden 3b und 3c an die Dreiphasenwechselspannungsquelle 5 und die äußeren Elekroden 3a und 3d an Masse 6 angeschlossen.

Die sich zwischen je zwei benachbarten Elektroden aufbauenden elektrischen Felder haben eine nahezu gleichmäßige Verteilung der Feldlinien über den gesamten Strömungskanalquerschnitt, so daß die Kern- und Randzonen des fließfähigen Gutes gleichmäßig durchsetzt sind und erwärmt werden. Mit dem Anschluß der beiden äußeren Elektroden 3a, 3d an Masse 6 ist eine Erwärmungsstrecke definierter Länge aufgebaut, während angrenzende Rohrleitungen einer Behandlungsanlage spannungsfrei bleiben.

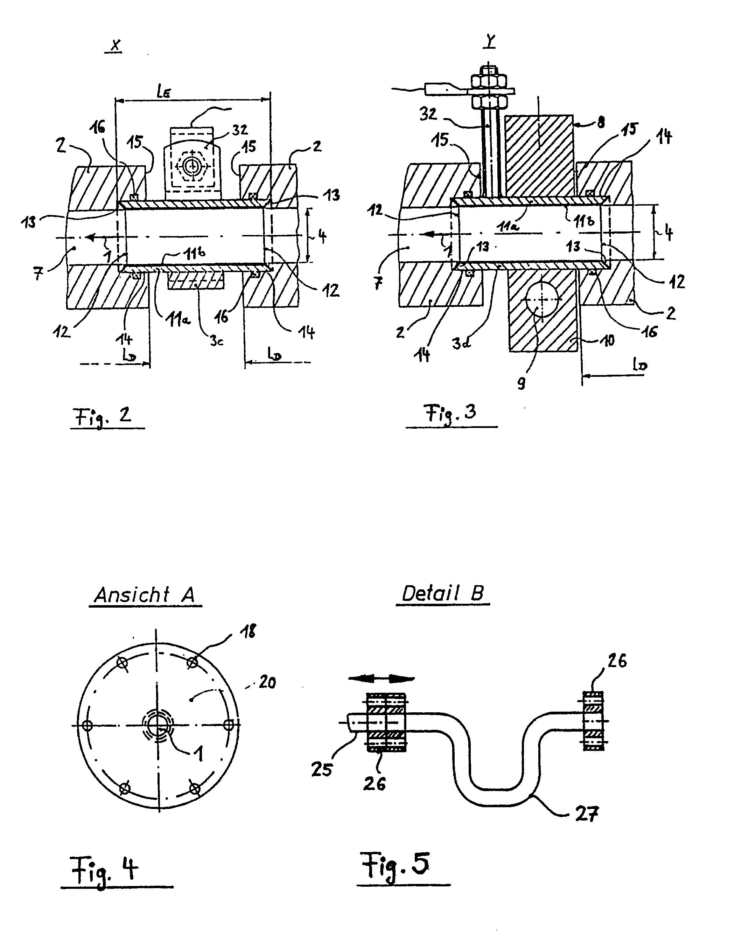

Neben einem einfachen elektrischen Anschluß 32 der Elektroden 3 (Fig. 2) kann zumindest einer Elektrode, z. B. der abflußseitigen Elektrode 3d, eine zusätzliche Kühlvorrichtung 8 zugeordnet sein. Die Kühlvorrichtung 8 mit einem Kühlmittelkanal 9 ist von einem durchströmbaren Kühlkörper 10 gebildet, der die Elektrode 3d umfaßt. Dabei können der Kühlkörper 10 und die Elektrode 3d eine Einheit bilden (Fig. 3).

Die Elektroden 3a, 3b, 3c, 3d bestehen in besonderer Ausbildung aus zwei unterschiedlich leitenden koaxialen Bereichen 11a, 11b. Auf den Grundkörper 11a ist dabei eine korrosionsbeständige Innenschicht 11b, z. B. aus Platin, aufgebracht, so daß für die dem fließfähigen Gut zugewandte Seite des Strömungskanals 7 keine Beeinträchtigungen auftreten und ein problemloser Transport des Gutes über die Elektroden 3a, 3b, 3c, 3d hinweg gewährleistet ist.

Die Elektroden 3a, 3b, 3c, 3d weisen an ihren Stirnenden 12 kegelige Abschrägungen 13 auf, die in den Stirnenden 15 der rohrförmigen Distanzstücke 2 aufgenommen werden, in denen entsprechende Aussparungen 14 vorgesehen sind. Mit dieser Gestaltung der Elektrodenenden und der Aussparungen 14 in den Distanzstücken 2 wird ein vorteilhafter bündiger Anschluß der Elektroden 3a, 3b, 3c, 3d an die Distanzstücke 2 und eine exakte Fixierung für die Montage erreicht. Als zusätzliche Absicherung gegen äußere Einflüsse ist in der Umfangswand der Aussparung 14 der Distanzstücke 2 eine radiale Dichtung 16 angeordnet.

Um die elektrische Stromdichte an den Elektrodenoberflächen zu minimieren und den unterschiedlichen Erwärmungsanforderungen an das fließfähige Gut gerecht zu werden, steht die Länge LD der Distanzstücke 2 zur Länge LE der Elektroden 3a, 3b, 3c, 3d in einem definierten Verhältnis von z.B. 2:1 bis 5:1. Dieses Längenverhältnis LD zu LE kann sich in Abhängigkeit von der in Strömungsrichtung 1 steigenden Temperatur im Gutstrom von Distanzstück 2 zu Distanzstück 2 vergrößern. Damit wird ein gleichmäßiger und kontinuierlicher Erwärmungsvorgang im fließenden Gut erreicht, da eine hohe elektrische Spannung bei gleichzeitig geringer Elektrodenstromdichte die erforderliche Leistung in das zu erwärmende Gut überträgt.

Die Distanzstücke 2 und die Elektroden 3a, 3b, 3c, 3d sind an den fugenlosen Berührungsstellen miteinander verspannt, verklebt oder verschraubt, wobei eine Kegelnut in der Aussparung 14 die Abschrägungen 13 an den Elektrodenenden aufnimmt. Da das korrosionsbeständige Material der Innenschicht 11b der Elektroden 3a, 3b, 3c, 3d an den Berührungsflächen von Elektroden 3a, 3b, 3c, 3d und Distanzstücken 2 sich über die kegeligen Abschrägungen 13 erstreckt und in das vorteilhaft aus Polytetrafluoräthylen bestehende Distanzstück 2 hineinreicht, sind Übergangsstellen geschaffen, die das fließfähige Gut ungehindert passieren lassen. Ferner ist bis an die Grenzstelle der Schicht 11b am isolierenden Distanzstück 2 ein kontinuierlicher Feldlinienaustritt erreicht.

Die rohrförmigen Distanzstücke 2 sind vorzugsweise in der geometrischen Mitte der Außenmantelfläche jeweils von einem ringförmigen Zentrierstück 17 umfaßt. Dieses Zentrierstück 17 ist nahe seinem Außenrand mit axialen Durchgangsbohrungen 18 versehen. Diese dienen zur Aufnahme von Spannstangen 19, die durch sämtliche Zentrierstücke 17 hindurchreichen und im Bereich ihrer Enden jeweils eine Endplatte 20 durchgreifen. Die Spannstangen 19 sind in ihrem Außendurchmesser auf die Durchgangsbohrungen 18 derart abgestimmt, daß die Zentrierstücke 17 in ihrer Einbaulage fixiert sind. Zumindest ein Ende der Spannstangen 19 wird gegen die Endplatte 20 mittels einer Feder 21 verspannt, und die Vorspannung kann durch entsprechende Stellschrauben 22 veränderlich eingestellt werden. Über ein definiertes Spannmoment an den Stellschrauben 22 ist somit erreichbar, daß die rohrförmigen Elektroden 3a, 3b, 3c, 3d und die rohrförmigen Distanzstücke 2 in axialer Richtung in einen definierten Vorspannungszustand versetzt werden. Dieser ist in Abhängigkeit vom Material der verwendeten Distanzstücke 2, z. B. Polytetrafluoräthylen, so zu wählen, daß auch für hohe Produkttemperaturen die erforderliche Druckfestigkeit erreicht wird.

In den Endplatten 20 ist auf der Innenseite eine zylindrische Aussparung 23 mit einer axialen Dichtung 24 vorgesehen, in der äußere rohrförmige Distanzstücke 2a, 2b mit einem entsprechenden, als Absatz ausgebildeten Spitzende eingreifen und über die Dichtung 24 nach außen hin abgedichtet werden. Diese Dichtung 24 ist vorteilhaft eine Axialdichtung, welche die auftretenden Spannkräfte aufnehmen kann.

An den Endplatten 20 sind außen Rohrleitungsstutzen 25, 28 mit einem Verbindungsflansch 26 angeschweißt. Über diesen Verbindungsflansch 26 kann als Dehnungskompensationsmittel 27 ein U-förmig gebogenes Rohrstück angeschlossen (Fig. 5) sein, das seinerseits beidseitig mit einem Verbindungsflansch 26 versehen ist. Ein solcher Dehnungsrohrkompensator kann am Anfang, am Ende und/oder zwischen Erwärmungseinheiten angeordnet sein, von denen mehrere hintereinander-geschaltet in einer Behandlungsanlage vorgesehen sein können. Sie kompensieren bei ansteigender bzw. abfallender Temperatur die entsprechenden Längenänderungen der Rohrteile der Vorrichtung in Strömungsrichtung 1.

Am abströmseitigen Rohrleitungsstutzen 28 ist vorteilhaft ein Temperaturfühler 29 angeordnet, und dieser ist mit einer Regelvorrichtung 30 für die Temperatur des Behandlungsgutes verbunden, die mittels einer elektrischen Leistungsregelung über Phasenanschnittsteuerglieder 31 oder mittels einer Regelung der Durchflußleistung die Guttemperatur beeinflußt. Über ein Zu- bzw. Abschalten von Elektroden 3a, 3b, 3c, 3d ist ebenfalls eine Temperaturregelung in dieser Vorrichtung erreichbar.

Die Dreiphasenwechselspannungsquelle 5 ist zweckmäßig von einem Drehstromgenerator gebildet, dessen Primärwicklung 34 durch die Regelvorrichtung 30 beeinflußbar sein kann.

Die gesamte Erwärmungsvorrichtung kann in ihrer Leistungsfähigkeit und Regelbarkeit an besondere Anforderungen dadurch angepaßt werden, daß mehrere Erwärmungseinheiten der beschriebenen Art hintereinander angeordnet sind.

Die durch Anordnung mehrerer Temperaturfühler und mehrerer Regelvorrichtungen 30 kann die Genauigkeit der Temperaturüberwachung weiter verfeinert werden, um eine Schädigung des fließfähigen Gutes auch bei besonders hoher Empfindlichkeit sicher auszuschließen.

Die vorbeschriebene Vorrichtung ist besonders für Molkereiprodukte aller Art geeignet, die besonders leicht zu Ablagerungen an Erhitzerflächen neigen, kann jedoch grundsätzlich für alle fließfähigen Medien Anwendung finden.

## Patentansprüche

1. Vorrichtung zur konduktiven Erwärmung von fließfähigen Gütern, insbesondere Nahrungs- oder Genußmitteln, in einem Strömungskanal (7) mit gleichbleibendem Querschnitt, bei der der Strömungskanal bereichsweise von Wandteilen aus elektrisch isolierendem Material und von Elektroden bildenden Wandteilen für den Aufbau eines elektrischen Feldes im Gutstrom begrenzt ist, **dadurch gekennzeichnet**, daß in Strömungsrichtung (1) abwechselnd hintereinander rohrförmige Distanzstücke (2) aus isolierendem Material und rohrförmige Elektroden (3a, 3b, 3c, 3d) vorgesehen sind, die zwischen sich jeweils ein axial ausgerichtetes elektrisches Feld aufbauen.

2. Vorrichtung nach Anspruch 1, **dadurch gekennzeichnet**, daß die Distanzstücke (2) und die Elektroden (3a, 3b, 3c, 3d) im Innendurchmesser (4) gleich sind und fugenlos aneinandergrenzen.

3. Vorrichtung nach Anspruch 1 und 2, **dadurch gekennzeichnet**, daß vier Elektroden (3a, 3b, 3c, 3d) für den Aufbau von drei axial hintereinander angeordneten elektrischen Feldern eine Erwärmungseinheit bilden und die beiden mittleren Elektroden (3b, 3c) der Erwärmungseinheit an eine Dreiphasenwechselspannungsquelle (5) angeschlossen sind.

4. Vorrichtung nach einem der Ansprüche 1 bis 3, **dadurch gekennzeichnet**, daß die in Strömungsrichtung (1) erste (3a) und letzte Elektrode (3d) an Masse (6) angeschlossen sind.

5. Vorrichtung nach einem der Ansprüche 1 bis 4, **dadurch gekennzeichnet**, daß den Elektroden (3a, 3b, 3c, 3d) eine Kühlvorrichtung (8) zugeordnet ist.

6. Vorrichtung nach Anspruch 5, **dadurch gekennzeichnet**, daß die Kühlvorrichtung (8) als ein von außen aufgesetzter, mit einem Kühlmittelkanal (9) versehener Kühlkörper (10) ausgebildet ist, der die Elektroden (3a, 3b, 3c, 3d) ganz oder teilweise umfaßt.

7. Vorrichtung nach Anspruch 5 und 6, **dadurch gekennzeichnet**, daß der Kühlkörper (10) und die Elektrode (3d) eine Einheit bilden, in der mehrere Kühlmittelkanäle (9) vorgesehen sind.

8. Vorrichtung nach einem der Ansprüche 1 bis 7, **dadurch gekennzeichnet**, daß die Elektroden (3a, 3b, 3c, 3d) zwei unterschiedliche, leitende, koaxiale Schichten (11a, 11b) umfassen.

9. Vorrichtung nach Anspruch 8, **dadurch gekennzeichnet**, daß die dem fließfähigen Gut zugewandte Schicht (11b) der Elektroden (3a, 3b, 3c, 3d) aus korrosionsbeständigem Material, z. B. Platin, besteht.

10. Vorrichtung nach einem der Ansprüche 1 bis 9, **dadurch gekennzeichnet**, daß die rohrförmigen Elektroden (3a, 3b, 3c, 3d) an ihren Stirnenden (12) mit einer innenseitigen kegeligen Abschrägung (13) versehen sind.

11. Vorrichtung nach einem der Ansprüche 1 bis 10, **dadurch gekennzeichnet**, daß an den Stirnenden (15) der rohrförmigen Distanzstük-

ke (2) Aussparungen (14) zur bündigen Aufnahme der Stirnenden (12) der Elektroden (3a, 3b, 3c, 3d) vorgesehen sind.

12. Vorrichtung nach einen der Ansprüche 1 bis 11, **dadurch gekennzeichnet**, daß am Innenende der Aussparung (14) in den Distanzstücken (2) eine Kegelnut zur bündigen Aufnahme des angeschrägten Stirnendes (12) der Elektroden (3a, 3b, 3c, 3d) vorgesehen ist.

13. Vorrichtung nach Anspruch 11 oder 12, **dadurch gekennzeichnet**, daß in der Umfangswand der Aussparung (14) eine radiale Dichtung (16) angeordnet ist.

14. Vorrichtung nach einem der Ansprüche 1 bis 13, **dadurch gekennzeichnet**, daß die Länge (LD) des Distanzstücks (2) zwischen zwei Elektroden (3a, 3b, 3c, 3d) zur Länge (LE) der benachbarten Elektroden (3a, 3b, 3c, 3d) ein definiertes Verhältnis aufweist.

15. Vorrichtung nach Anspruch 14, **dadurch gekennzeichnet**, daß sich das Längenverhältnis LD : LE in Abhängigkeit von der in Strömungsrichtung (1) steigenden Temperatur im fließfähigen Gut von Elektrode zu Elektrode bei vorzugsweise konstanter Elektrodenlänge (LE) vergrößert.

16. Vorrichtung nach einem der Ansprüche 1 bis 15, **dadurch gekennzeichnet**, daß die Distanzstücke (2) und die Elektroden (3a, 3b, 3c, 3d) durch axiales Verspannen,durch Verkleben oder Verschrauben miteinander verbunden sind.

17. Vcrrichtung nach einem der Ansprüche 1 bis 16, **dadurch gekennzeichnet**, daß die Distanzstücke (2) aus Polytetrafluoräthylen bestehen oder eine Innenbeschichtung aus Polytetrafluoräthylen umfassen.

18. Vorrichtung nach einem der Ansprüche 1 bis 17, **dadurch gekennzeichnet**, daß die rohrförmigen Distanzstücke (2) jeweils ein ringförmiges Zentrierstück (17) aufweisen, das diesen vorzugsweise in der Mitte der äußeren Mantelfläche zugeordnet ist.

19. Vorrichtung nach Anspruch 18, **dadurch gekennzeichnet**, daß das Zentrierstück (17) nahe seinem Außenrand axiale Durchgangsbohrungen (18) zur Aufnahme von Spannstangen (19) aufweist.

20. Vorrichtung nach Anspruch 18 oder 19, **da-**

**durch gekennzeichnet**, daß die Enden der Spannstangen (19) ringförmige außenliegende Zentrierstücke (17) außenseitig benachbarter Endplatten (20) durchgreifen und diesen gegenüber, an zumindest einem Ende über eine Feder (21),verspannt sind.

21. Vorrichtung nach einem der Ansprüche 18 bis 20, **dadurch gekennzeichnet**, daß die Vorspannung der Spannstangen (19) durch Stellschrauben (22) veränderlich ist.

22. Vorrichtung nach einem der Ansprüche 1 bis 21, **dadurch gekennzeichnet**, daß die Endplatten (20) auf der Innenseite eine zylindrische Aussparung (23) mit einer axialen Dichtung (24) aufweisen, in der äußere rohrförmige Distanzstücke (2a, 2b) mit einem Spitzende eingreifen.

23. Vorrichtung nach einem der Ansprüche 20 bis 22, **dadurch gekennzeichnet**, daß die Endplatten (20) mit einem Rohrleitungsstutzen (25) mit Verbindungsflansch (26) versehen sind.

24. Vorrichtung nach einem der Ansprüche 1 bis 23, **dadurch gekennzeichnet**, daß sich am Anfang, am Ende und/oder zwischen den Erwärmungseinheiten ein Dehnungskompensationsmittel (27) befindet.

25. Vorrichtung nach Anspruch 24, **dadurch gekennzeichnet**, daß als Dehnungskompensationsmittel (27) ein U-förmig gebogenes Rohrstück außerhalb der Erwärmungseinheit vorgesehen ist.

26. Vorrichtung nach einem der Ansprüche 1 bis 25, **dadurch gekennzeichnet**, daß auf der Abströmseite der Vorrichtung ein Temperaturfühler (29) angeordnet und dieser mit einer Regelvorrichtung (30) für die Guttemperatur verbunden ist, die die elektrische Beaufschlagung der Elektroden (3a, 3b, 3c, 3d) mit der Dreiphasenwechselspannungsquelle (5) und/oder eine Pumpe für den Gutdurchsatz beeinflußt.

27. Vorrichtung nach den Ansprüchen 1 bis 26, **dadurch gekennzeichnet**, daß Elektroden (3a, 3b, 3c, 3d) wahlweise zu- oder abschaltbar sind.

28. Vorrichtung nach einem der Ansprüche 1 bis 27, **dadurch gekennzeichnet**, daß die Dreiphasenwechselspannungsquelle(5) von einem Drehstromgenerator gebildet ist.

29. Vorrichtung nach den Ansprüchen 1, 26 bis 28, **dadurch gekennzeichnet**, daß die Regelvorrichtung (30) Phasenanschnittsteuerglieder (31) in den Phasenleitern der Primärwicklung (34) des Drehstromgenerators (5) beeinflußt.

30. Vorrichtung nach Anspruch 29, **dadurch gekennzeichnet**, daß die Sekundärwicklung (33) des Drehstromgenerators als Dreieck geschaltet ist und ein Eckpunkt an Masse (6) gelegt ist.

31. Vorrichtung nach Anspruch 1 bis 30, **dadurch gekennzeichnet**, daß mehrere Erwärmungseinheiten hintereinander geschaltet sind.

*Fig. 1*

EP 0 457 179 A1

X

Fig. 2

Y

Fig. 3

Ansicht A

Fig. 4

Detail B

Fig. 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl.⁵) |
|---|---|---|---|
| D,A | <u>WO - A1 - 87/04 902</u><br>(FINNAH)<br>* Zusammenfassung; Ansprüche 1,2; Fig. 4,5a,5b *<br>-- | 1 | H 05 B 3/60<br>A 23 L 3/22 |
| A | <u>WO - A1 - 89/00 384</u><br>(BECKSWIFT)<br>* Zusammenfassung; Anspruch 1; Fig. 2,3 *<br>-- | 1 | |
| D,A | <u>EP - A1 - 0 032 840</u><br>(THE ELECTRICITY CONCIL)<br>* Zusammenfassung; Anspruch 1; Fig. 1 *<br>-- | 1,3,4 | |
| D,A | <u>DE- C - 890 551</u><br>(AEG)<br>* Seite 2, Zeilen 18-45; Fig. 1 *<br>---- | 1 | |

| RECHERCHIERTE SACHGEBIETE (Int. Cl.⁵) |
|---|
| A 23 L 3/00<br>H 05 B 3/00<br>H 05 B 6/00 |

Der vorliegende Recherchenbericht wurde für alle Patentansprüche erstellt.

| Recherchenort | Abschlußdatum der Recherche | Prüfer |
|---|---|---|
| WIEN | 31-07-1991 | TSILIDIS |